# EUROPÄISCHE PATENTSCHRIFT

(11) **EP 0 492 275 B1**
(45) Veröffentlichungstag und Bekanntmachung des Hinweises auf die Patenterteilung: **14.08.1996**
(21) Anmeldenummer: 91121212.4
(22) Anmeldetag: 11.12.1991
(51) Int. Cl.: G04G 15/00, G11B 15/02, H04N 5/782

(54) **Einrichtung bestehend aus Videoaufzeichnungsgerät und Bar-Code-Leser für die wahlfreie Belegung der Programmplätze des Videoaufzeichnungsgerätes**
Apparatus composed of a videorecorder and a bar code reader for the free choise of the program locations of the videorecorder
Dispositif comprenant un enregistreur vidéo et un lecteur de codes à barres pour le choix libre de l'emplacement des programmes de l'enregistreur vidéo

(30) Priorität: 22.12.1990 DE 4041487
(43) Veröffentlichungstag der Anmeldung: 01.07.1992
(73) Patentinhaber: GRUNDIG E.M.V. Elektro-Mechanische Versuchsanstalt Max Grundig GmbH & Co. KG, D-90762 Fürth (DE)
(72) Erfinder: Hökberg, Anders, Grundig E.M.V., Max Grundig, W-8510 Fuerth (DE)

(56) Entgegenhaltungen:
- GB-A- 2 034 995

## Beschreibung

Die Erfindung betrifft eine Einrichtung mit den im Oberbegriff des Anspruchs 1 angegebenen Merkmalen.

Zur beitragsgesteuerten Aufzeichnung von Fernsehprogrammbeiträgen ist z.B. aus der DE-PS 33 28 001 eine Einrichtung bekannt, die im Fernsehsignal übertragene Beitragskennungen, welche die Programmquelle, die Beitragssendezeit und das Sendedatum identifizieren, auswertet. Um einen gewünschten Programmbeitrag aufzuzeichnen, muß der Benutzer den zugehörigen Programmplatz (Empfangsfrequenz), die angekündigte Sendezeit und das Datum des Sendetags manuell dem Videoaufzeichnungsgerät eingeben oder, um den Programmiervorgang zu erleichtern, die benötigten Daten mittels Bar-Code-Leser einer Programmzeitschrift entnehmen.

Aus GB 2 034 995 A ist eine Einrichtung bekannt, bei der für ein Rundfunk- oder Fernsehempfangsteil die Zuordnung von Empfangsfrequenzen oder -kanälen zu den jeweiligen Programmquellen mittels Bar-Code-Leser erfolgen kann. Dazu kann eine Liste verwendet werden, auf der die jeweiligen Programmquellen mit ihren zugehörigen Frequenzen oder Kanälen fest vorgegeben sind.

Bei der Programmierung mittels Bar-Code-Leser muß aber die Belegung der Programmplätze des Videoaufzeichnungsgerätes mit den Fernsehprogrammquellen dieselbe Zuordnung aufweisen, wie sie in der zur Programmierung verwendeten Programmzeitschrift vorbestimmt ist.

Diese Vorgabe der Belegung der Programmplätze ist als nachteilig anzusehen, da die vorbestimmte Zuordnung oft nicht mit der dem Benutzer individuellen und gewohnten Zuordnung übereinstimmt.

Die Aufgabe der Erfindung besteht deshalb darin, eine Einrichtung der eingangs erwähnten Art dahingehend zu verbessern, daß die Belegung der Programmplätze des Videoaufzeichnungsgerätes mit den gewünschten Fernsehprogrammquellen unabhängig von der Belegung, wie sie durch die als Bar-Code-Informationsquelle dienende Programmzeitschrift vorgegeben ist, vorgenommen werden kann.

Diese Aufgabe wird erfindungsgemäß durch die kennzeichnenden Merkmale des Anspruchs 1 gelöst. Vorteilhafte Weiterbildungen ergeben sich aus den Unteransprüchen.

Der Vorteil der Erfindung liegt insbesondere darin, daß der Benutzer der Einrichtung auch bei Programmierung mit Bar-Code-Informationen aus einer Programmzeitschrift die gewohnte Belegung der Programmplätze des Videoaufzeichnungsgerätes beibehalten kann.

Die Erfindung geht von der Überlegung aus, daß bei der erstmaligen Inbetriebnahme der Einrichtung, bestehend aus Videoaufzeichungsgerät und Bar-Code-Leser, eine "Lernphase" durchgeführt wird. Dabei trägt der Benutzer in eine Liste, die z.B. in der Betriebsanleitung enthalten ist und Bar-Codes für die jeweiligen Programmplätze aufweist, die Fernsehprogrammquellen in gewünschter Reihenfolge ein. Mit dem Bar-Code-Leser wird dann das Bar-Code-Feld des Programmplatzes überstrichen und anschließend - in der zu Verfügung stehenden Programmzeitschrift - das Bar-Code-Feld eines Sendebeitrags der für diesen Programmplatz gewünschten Fernsehprogrammquelle. Der Bar-Code-Leser hat auf diese Weise die gewünschte Zuordnung Programmplatz - Fernsehprogrammquelle erfaßt. Wird beispielsweise gewünscht, daß die Fernsehprogrammquelle BR3 dem Programmplatz drei zugeordnet wird, in der Programmzeitschrift aber der Programmplatz sechs vorgesehen ist, so trägt der Benutzer in der Liste mit den Bar-Codes für die Programmplätze bei Programmplatz drei BR3 ein. Mittels Bar-Code-Leser wird dann das Bar-Code-Feld für Programmplatz drei erfaßt und anschließend das Bar-Code-Feld für BR3 in der Programmzeitschrift (hier: Programmplatz sechs). Dadurch ordnet die Einrichtung automatisch bei der Programmierung eines Beitrags von BR3 statt des Programmplatzes sechs den individuell gewählten Programmplatz drei zu. In gleicher Weise werden vom Bar-Code-Leser die Zuordnungen für alle anderen Programmplätze und Fernsehprogrammquellen erfaßt. Die so im Speicher des Bar-Code-Lesers entstandene Zuordnungstabelle kann im Bar-Code-Leser fest abgespeichert werden oder zum Videoaufzeichnungsgerät übermittelt und im dort vorhandenen Speicher abgelegt werden.

Mit der abgespeicherten Zuordungstabelle ist die Einrichtung in der Lage, bei Programmierung des Videoaufzeichnungsgerätes mittels Bar-Code-Leser und in einer Programmzeitschrift enthaltenen Bar-Code-Informationen, die individuell mit Fernsehprogrammquellen belegten Programmplätze in der Art zuzuordnen, daß die in der Programmzeitschrift vorgesehene Zuordnung beachtet und umgesetzt wird.

## Patentansprüche

1. Einrichtung bestehend aus Videoaufzeichnungsgerät und Bar-Code-Leser für die wahlfreie Belegung der Programmplätze des Videoaufzeichnungsgerätes unabhängig von der Zuordnung der Programmplätze zu den Programmquellen in den Bar-Code-Informationen einer Programmzeitschrift, wobei sie
- eine Bar-Code-Liste der Programmplätze,
- einen Speicher und
- einen Mikrocomputer aufweist,
**dadurch gekennzeichnet,**
daß die Einrichtung
derart ausgebildet ist, daß bei der ersten Inbetriebnahme in die Bar-Code-Liste eine gewünschte Programmplatzbelegung eingetragen wird, und daß mittels Bar-Code-Leser diese individuelle Belegung, sowie die vorgegebene Belegung der Programmplätze aus einer
Programmzeitschrift erfaßt werden und für diese Belegungen von dem Mikrocomputer eine Zuordnung-stabelle erstellt wird, welche im Speicher abgelegt wird.

2. Einrichtung nach Anspruch 1,
**dadurch gekennzeichnet,**
daß der Bar-Code-Leser
- den Speicher und
- den Mikrocomputer
enthält, und daß die Zuordnungstabelle der gewählten und im Speicher abgelegten Programmplatzbelegung zu der durch die Programmzeitschrift vorgegebenen Belegung der Programmplätze bei der Programmierung durch den Mikrocomputer erfolgt und die so bestimmte Programmplatznummer drahtlos oder drahtgebunden zum Videoaufzeichnungsgerät übermittelt wird.

3. Einrichtung nach Anspruch 1,
**dadurch gekennzeichnet,**
daß das Videoaufzeichnungsgerät
- den Speicher und
- den Mikrocomputer
enthält, und daß bei der Programmierung der Bar-Code-Leser dem Videoaufzeichnungsgerät die aus der Programmzeitschrift erfaßte Programmplatznummer drahtlos oder drahtgebunden übermittelt und der Mikrokomputer mittels der im Speicher abgelegten Zuordnungstabelle, der gewählten Programmplatzbelegung zu der durch die Programmzeitschrift vorgegebenen Belegung der Programmplätze, die einzustellende Programmplatznummer ermittelt.

## Claims

1. Device consisting of a video recorder and a bar-code reader for the optional assignment of the video recorder programme slots independently of the allocation of the programme slots to the programme sources in the bar-code data of a programme guide, the device having
- a bar-code list of the programme slots
- a memory, and
- a microcomputer
**characterised in that** the device is constructed in such a way that on initial operation, a desired programme slot assignment is entered in the bar-code list, and that this individual assignment, as well as the assignment of the programme slots specified by a programme guide, is captured by means of a bar-code reader and the microcomputer generates an allocation table for these assignments, which is stored in the memory.

2. Device according to Claim 1,
characterised in that the bar-code reader contains
- the memory and
- the microcomputer
and that the allocation table of the selected programme slot assignment stored in the memory and of the programme slot assignment specified by the programme guide is generated during programming by the microcomputer, and the programme slot number determined in this way is transmitted to the video recorder by wireless communication or line communication means.

3. Device according to Claim 1,
characterised in that
the video recorder contains
- the memory and
- the microcomputer
and that during the programming of the bar-code reader, the programme slot number captured from the programme guide is transmitted to the video recorder by wireless communication or line communication means and the microcomputer determines the programme slot number to be set by means of the allocation table of the selected programme slot assignment stored in the memory and the programme slot assignment specified by the programme guide.

## Revendications

1. Dispositif constitué par un appareil d'enregistrement vidéo et par un lecteur de codes barres pour l'occupation au choix des places de programmes de l'appareil d'enregistrement vidéo, indépendamment de l'affectation des places de programmes par rapport aux sources de programmes dans les informations à codes barres d'un magazine de programme, le dispositif comportant une table de codes barres des places de programmes, une mémoire et un micro-ordinateur, caractérisé en ce que le dispositif est formé de telle sorte que lors de la première mise en marche, une occupation des places de programmes désirée est inscrite dans la table de codes barres, et en ce que au moyen du lecteur de codes barres, cette occupation individuelle ainsi que l'occupation prédéfinie des places de programmes sont saisies à partir d'un magazine de programmes et pour ces occupations, une table d'affectation est établie par l'ordinateur, liste qui est mémorisée dans la mémoire.

2. Dispositif selon la revendication 1, caractérisé en ce que le lecteur codes barres comporte la mémoire et le micro ordinateur, et en ce que la table d'affectation de l'occupation des places de programmes choisie et mémorisée dans la mémoire par rapport à l'occupation des places de programmes prédéfinie par le magazine de programmes est établie lors de la programmation par le micro-ordinateur, et le numéro de place de programme ainsi déterminé est transmis sans fil ou par fil à l'appareil d'enregistrement vidéo.

3. Dispositif selon la revendication 1, caractérisé en ce que l'appareil d'enregistrement vidéo comporte la mémoire et le micro-ordinateur, et en ce que lors de la programmation, le lecteur de codes barres transmet sans fil ou par fil le numéro d'emplacement de programme saisi à partir du magazine de programmes, à l'appareil d'enregistrement vidéo et le micro-ordinateur détermine le numéro d'emplacement de programme à régler au moyen de la table d'affectation mémorisée dans la mémoire, table d'affectation de l'occupation des places de programmes choisie par rapport à l'occupation des places de programmes prédéfinies par le magazine de programmes.
